# EUROPEAN PATENT APPLICATION

(11) **EP 1 992 596 A1**
(43) Date of publication of application: **19.11.2008**
(21) Application number: 08103738.4
(22) Date of filing: 28.04.2008
(51) Int. Cl.: C04B 28/00

(54) **A building element and a method to produce such element**

(30) Priority: 27.04.2007 SE 0701015
(71) Applicant: ECS teknik AB, 776 96 Krylbo (SE)
(72) Inventor: Åkesson, Knut, 77596 Krylbo (SE); Åkesson, Jonas, 77596 Krylbo (SE)
(74) Representative: Aslund, G Roland

(57) **Abstract**

A building element is produced by way of first mixing a mineral binding agent with small grains sized 0.5-1.5 mm of expanded volcanic silicate sand (THERMOSILIT) and then mixing the achieved cast compound with larger pellets of expanded and sintered clay (LECA) and casting an air-proof element of the mixture. Thereby an element is achieved which is air-proof, has low density, high compression strength, low diffusion resistance, and high thermal transmittance resistance.

## Description

### Technical field

This invention relates to a building element which contains pellets of expanded and sintered clay.

### Background of the invention

On the market, there are blocks consisting of ball-formed pellets of expanded and sintered clay. These pellets and the blocks which consist of such pellets affixed at their contact surfaces by pure cement are sold for example under the brand name LECA.

On the market, there is also a plaster base which is sold under the brand name THERMOSILIT and consists of small grains of expanded volcanic silicate sand. The plaster base is mixed with a binding agent, for example cement. Grains of expanded silicate sand have very low density, high insulation ability and low diffusion resistance, but they have low compression strength. The grains are commonly 0.5-1.5 mm and irregular with an appearance which reminds of raspberries. The grains can be produced in dimensions up to 3 mm.

### Object of invention

It is an object of the invention to provide a building element which is air-proof, has low density, high compression strength, low diffusion resistance, and high thermal transmittance resistance.

This is fulfilled by combining the two products marketed under the names LECA and THERMOSILIT in the manner defined in the claims.

### Brief description of the drawings

**Figure 1** shows a perspective view of an example of an inventive building block.
**Figure 2** shows one half of a modified building block.

### Description of the invention

A building element is produced by mixing THERMOSILIT grains with a mineral binding agent, for example cement or lime cement and water, to a cast compound, and mixing this cast compound with LECA pellets and casting the mixture to achieve an air-proof element. The cast compound (the matrix) has relatively low compression strength, but the admixture of LECA pellets increases the compression strength. The highest compression strength is achieved when the LECA pellets is in contact with each other as in a LECA block. Higher thermal transmittance resistance is also achieved, that is to say better insulation ability (lower λ value), because there is no air between the pellets that can circulate in the block. To achieve the smallest share of LECA pellets as possible, that is to say to achieve the best insulation abilities possible, the pellets should be as even in size as possible, that is to say, only one fraction should be used and it could be the fraction 8-12 mm.

An even lower λ value is achieved if the admixture of LECA pellets is smaller so that the pellets will lie freely in the matrix. The compression strength will despite this be higher than for a block of only LECA pellets. This could be due to the fact that the pellets in a conventional LECA block have very small contact surfaces, and that the matrix in an inventive block functions pressure equalizing so that a larger surface on each LECA pellet will take load.

The achieved block will be air-proof and have low diffusion resistance. The simplest way is to cast finished blocks in the desired dimension. However, the material can be sawn with a conventional saw used for wood and the sawing surface will be smooth. Thus, large blocks can alternatively be cast and then industrially sawn up to appropriate dimensions. The surface, no matter whether it is a cast surface or a sawn surface, can be plastered and a THERMOSILIT plaster could suitably be used, but another plaster could also be used.

An advantage with sawing the blocks is that a better dimension tolerance is achieved so that it is possible to lay bricks with a thinner joint. With a thin joint, a mortar with fillers is not needed to increase the compression strength but a THERMOSILIT plaster without sand could be used as mortar. With a thicker joint, small pellets of LECA, sand or another filler should be added. The LECA pellets in the mortar could for example be 2-4 mm. THERMOSILIT plaster commonly comprises only THERMOSILIT grains and a mineral binding agent, for example lime cement and water.

Since a better compression strength is achieved in the inventive elements than the compression strength of LECA blocks, and the inventive elements also achieves better bending strength, larger elements than before can be produced, for example large wall elements.

Other brands of expanded and sintered clay than the one sold under the brand name LECA could of course also be used. Likewise, other brands of expanded volcanic silicate sand than the one sold under the name THERMOSILIT could also be used, but for the sake of simplicity the brand names are used in this text. Likewise, another binding element than lime cement or cement mixed with water could be used, even though commonly one of these are preferred.

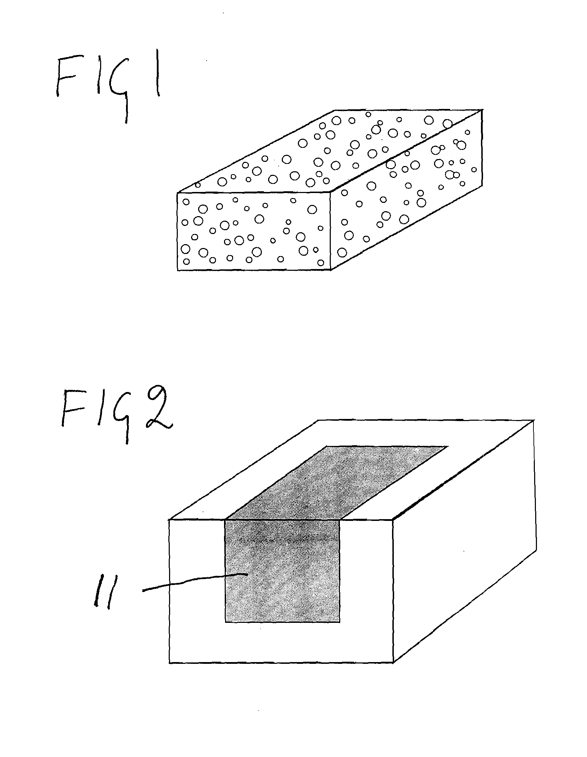

The figures show different examples of inventive building elements. **Figure 1** shows a building block with a matrix of above described type with cast in pellets of expanded and sintered clay. The building block is sawn out of a larger cast block and the sawn surfaces of the pellets in the surface are visible and of different size despite the pellets having approximately the same dimensions. **Figure 2** shows a bisected building block. It has improved insulation ability in comparison with the building block of figure 1. It has a hole in form of a cavity 11 which has been filled with pure THERMOSILIT mass with low proportion of binding agent and thus improved insulation ability but lower compression strength.

## Claims

1. A method of producing a building element, **characterised in that** a mineral binding agent is mixed with small grains sized less than 3 mm of expanded volcanic silicate sand and then the achieved cast compound is mixed with larger pellets of expanded and sintered clay, and the mixture is cast into an air-proof element.

2. The method according to claim 1, **characterised in that** a single fraction of pellets is used.

3. The method according to claim 1 or 2, **characterised in that** a large element is cast and then sawn up so that a number of building elements of desired size is achieved.

4. The method according to any one of the preceding claims, **characterised in that** smaller building elements of this kind is laid to a larger building element, for example a wall, and as mortar is used essentially the same cast compound as these smaller building elements are produced of, possibly with added fillers, for example small pellets of expanded sintered clay, to increase the compression strength of the joint.

5. A building element comprising pellets of expanded and sintered clay, **characterised in that** it is cast and has a matrix which fills the space between the pellets and makes the element air-proof, this matrix consisting of small grains sized less than 3 mm of expanded volcanic silicate sand mixed with a mineral binding agent.

6. The building element according to claim 5, **characterised in that** the admixture of pellets is such that the pellets lies freely in the matrix.

7. The building element according to claim 5, **characterised in that** the admixture of pellets is such that the pellets are in contact with each other.

8. The building element according to any one of the claims 5-7, **characterised in that** the element has cavities (11) filled with a mass of expanded volcanic silicate sand without pellets of clay and with better insulation ability and lower compression strength than said matrix.
